# EUROPÄISCHE PATENTSCHRIFT

(11) **EP 1 313 606 B1**
(45) Veröffentlichungstag und Bekanntmachung des Hinweises auf die Patenterteilung: **17.11.2004**
(21) Anmeldenummer: 01974215.4
(22) Anmeldetag: 29.08.2001
(51) Int. Cl.: B29C 70/54

(54) **VERFAHREN UND ANORDNUNG ZUM EINBRINGEN VON FASERGELEGESCHICHTEN IN FORMWERKZEUGE**
METHOD AND DEVICE FOR INSERTING PREPREG LAYERS INTO SHAPING TOOLS
PROCEDE ET DISPOSITIF POUR INTRODUIRE DES COUCHES PREIMPREGNEES DE FIBRES DANS DES OUTILS DE FORMAGE

(30) Priorität: 29.08.2000 DE 10042471
(43) Veröffentlichungstag der Anmeldung: 28.05.2003
(73) Patentinhaber: DLR Deutsches Zentrum für Luft- und Raumfahrt e.V., 53175 Bonn (DE); Invent Innovative Verbundwerkstoffe Realisation und Vermarktung Neuer Technologien GmbH, 38100 Braunschweig (DE); SAERTEX Wagener GmbH & Co. KG, 48369 Saerbeck (DE)
(72) Erfinder: ROTH, Ekkehard, 21423 Winsen (DE); SCHÖPPINGER, Carsten, 38259 Salzgitter (DE); HERMANN, Axel, 31228 Peine (DE); KLEINEBERG, Markus, 30966 Hemmingen (DE); PABSCH, Arno, 38110 Braunschweig (DE)
(74) Vertreter: Einsel, Martin
(86) Internationale Anmeldenummer: PCT/EP2001/009949
(87) Internationale Veröffentlichungsnummer: WO 2002/018121

(56) Entgegenhaltungen:
- DE-A- 4 139 523
- DE-A- 19 922 799
- DE-B- 1 174 049
- US-A- 3 781 155
- US-A- 6 029 327

## Beschreibung

Die Erfindung betrifft ein Verfahren und eine Anordnung zum Einbringen von Fasergelegeschichten in Formwerkzeuge beim Herstellen von Bauelementen aus Faserverbundwerkstoffen.

Bauelemente aus Faserverbundwerkstoffen, zum Beispiel faserverstärkten Kunststoffen werden beispielsweise für den Flugzeugbau benötigt. Zunehmend entsteht auch der Wunsch, ganze, auch größere Bauteile wie Seitenruder, Tragflächen und dergleichen aus einem einzigen, glelchzeitig angefertigten Bauteil herzustellen. Auch in der Kraftfahrzeugtechnik besteht der Wunsch, bisher aus Blech oder Aluminium hergestellte Bauelemente schon aus Gewichtsgründen aus Faserverbundwerkstoffen zu produzieren.

Anders als bei der Herstellung von Spritzgussartikeln beispielsweise für Armaturenverkleidungen sind die Stabllitätsanforderungen für solche Bauteile natürlich wesentlich höher. Auch die Anforderungen an die Sicherheit solcher Bauelemente ist beträchtlich, was beim Flugzeugbau unmittelbar einleuchtend ist.

Derartige Faserverbundwerkstoffe werden in mehreren Schichten aufeinander gelegt, mit entsprechenden Harzen getränkt und in Autoklaven ausgehärtet.

Für die Herstellung von röhrenförmigen Hohlkörpern schlägt die DE 1 174 049 B vor, zunächst einen starren Kern mit packenweise zugeschnittenen Filzplatten rundum zu belegen und einem Imprägnierharz zu tränken. Der Kern mit den getränkten und aufgelegten Filzplatten wird dann in eine Hohlform geschoben und anschließend die Luft aus dem Raum zwischen den Filzplatten und der Hohlform evakuiert. Der atmosphärische Druck hebt die Filzplatten von dem Formkern ab und drückt sie auf die Innenfläche der Hohlform, so dass der Formkern anschließend entnommen und wieder verwendet werden kann. Die Hohlform mit den Filzplatten kommt dann in den Autoklaven. Ein derartiges Verfahren ist recht kompliziert und nur für kleinformatige, röhrenförmige und damit symmetrisch und strukturell sehr einfach aufgebaute Hohlkörper.

Für die Herstellung zylindrischer Fitzmatten beschreibt die US-PS 3,781,155 den Gedanken, von einem kontinuierlichen Faserstrang, beispielsweise einem Glasfaserfilament, kurze Stücke abzuschneiden und diese Flocken auf eine rotierende Form fallen zu lassen, wo sie durch ein in der rotierenden Form befindliches Vakuum festgehalten werden, bis sie von einem aufgesprühten Kunstharz verfestigt werden. Diese Vorgehensweise ist für höhere Festigkeitsanforderungen und das Übertragen von Fasergelegeschichten ungeeignet.

Bei großformatigen Werkstücken führt allerdings die Handhabung bereits zu erheblichen Problemen. Ein kritischer Punkt ist dabei vor allem die Formtreue. Werden die verschiedenen Schichten der Faserverbundstruktur wie beispielsweise aus der DE 41 39 523 C2 bekannt mit verschiedenen Nähtechniken zusammengehalten und diese vernähten Strukturen danach transportiert, wird durch die Bewegung während des Transportes häufig eine Verschiebung der einzelnen Schichten retativ zueinander erfolgen und damit eine Kraft auf die Nähte ausgeübt, die dazu führt, dass diese Nähte sich innerhalb der Struktur scheuernd und zerstörend betätigen.

Auf den obersten Schichten führt eine unkontrollierte zum Beispiel kreisförmige Bewegung dieser Nähte zu kraterähnlichen Vertiefungen in der Struktur.

Wird zur Lösung dieses Problems versucht, möglichst mit wenigen Bewegungen und Transporten auszukommen, so könnte man die Faserverbundstrukturen unmittelbar in der Form für den Autoklaven aufbauen. Dazu müssten nacheinander die verschiedenen Schichten in die Formen gelegt werden. Die Fasern müssen jedoch werkstückbedingt mit teilweise scharfen Winkeln verlegt werden, wobei auch lediglich rechte Winkel schon zu Problem führen. Diese Fasern in den Fasergelegen haben nämlich die Tendenz, sich möglichst zu strecken, wobei dies auch zeitabhängig dazu führt, dass ein Fasergelege seine Form tendenziell zu einer eher ebenen Form überführen möchte. Legt man nun mehrere Schichten in einer solchen Form übereinander, so bildet sich in einem rechten Winkel zwischen den einzelnen Schichten jeweils ein sichelförmiger Hohlraum aus. Dies ist ausgesprochen unerwünscht und schwächt natürlich die Stabilität der entstehenden Struktur.

Aufgabe der Erfindung ist es demgegenüber, hier eine Abhilfe vorzuschlagen und ein Verfahren und eine dafür geeignete Anordnung vorzuschlagen, die diesem Effekt entgegentritt.

Diese Aufgabe wird gelöst durch ein Verfahren zum Einbringen von Fasergelegeschichten in Formwerkzeuge beim Herstellen von Bauelementen aus Faserverbundwerkstoffen, bei dem
- eine biegesteife Trägerstruktur mit einer gasdurchlässigen Oberseite versehen wird, deren äußere Kontur der inneren Kontur des Formwerkzeuges für das Bauelement entspricht, wobei die Dimensionierung um die Wandstärke des Bauelementes kleiner ist als die innere Kontur des Formwerkzeuges,
- der Innenraum der Trägerstruktur in Unterdruck relativ zum äußeren Druck versetzt wird,
- nacheinander eine oder mehrere Fasergelegeschichten auf der gasdurchlässigen Oberseite der Trägerstruktur abgelegt werden,
- die Trägerstruktur mit den aufgelegten Fasergelegeschichten bei weiterhin im Innenraum der Trägerstruktur herrschendem Unterdruck in das Formwerkzeug eingeführt wird, so dass die Fasergelegeschichten zwischen der inneren Kontur des Formwerkzeugs und der äußeren Kontur der Oberseiten der Trägerstruktur angeordnet sind,
- der Unterdruck im Innenraum der Trägerstruktur abgeschaltet und
- die Trägerstruktur aus dem Formwerkzeug herausgenommen wird.

Eine Anordnung zur Durchführung des Verfahrens zeichnet sich durch eine Trägerstruktur aus, deren Innenraum in Unterdruck relativ zum äußeren Druck versetzbar ist und mit einer gasdurchlässigen Oberseite versehen ist.

Überraschend wird mit einer solchen Maßnahme das Problem gelöst. Ein Formbauteil, dass der Negativform des Formwerkzeugs entspricht, mit kleineren, noch später zu erörternden Dimensionsabweichungen, ist dabei insbesondere mit Lochblechen auf wenigstens einer Fläche ausgerüstet. In seinem Inneren wird ein Unterdruck erzeugt. Wird nun von außen eine Fasergelegeschicht aufgelegt, so legt sich aufgrund des unter ihm herrschenden Unterdrucks sehr eng an das Lochblech an. Das gleiche gilt aber auch für jede weitere Fasergelegeschicht, die auf diese erste aufgelegt wird. Zugleich tritt dabei eine starke Verdichtung der einzelnen Fasergelege miteinander und ineinander auf, was sehr erwünscht ist. Diejenigen Bereiche des Formbauteils, an denen relativ scharfe Kanten existieren, beispielsweise rechte Winkel, werden dadurch sehr eng von sämtlichen Fasergelegen umgeben. Das Ausbilden der herkömmlichen sichelförmigen Hohlräume zwischen je zwei Fasergelegen unterbleibt dadurch vollständig.

Nachdem dieses Formbauteil vollständig mit dem beabsichtigten Schichtaufbau an Fasergelegen umgeben ist, wird das gesamte Forrnbaubeil unter Beibehaltung des Unterdrucks durch geeignete Handhabungsmechanismen genau negativ in das Formwerkzeug eingeführt.

Hier wird deutlich, warum die Dimension geringfügig kleiner ist als diejenige des Formwerkzeugs: Der Unterschied ist genau derjenige, der zuvor für die Dicke der Schicht aus Fasergelegen berücksichtigt worden ist. Die beiden Elemente, also das Formbauteil und das Formwerkzeug, passen mit den Fasergelegen dazwischen genau ineinander.

An dieser Position kann jetzt der Unterdruck abgestellt und das Formbauteit wieder herausgenommen werden. Jetzt liegen die Fasergelege genau in dem Formwerkzeug, wobei durch die Verdichtung eine sehr exakte Formhaltigkeit gegeben ist.

Aus dem Stand der Technik ist Unterdruck in dieser Beziehung noch nicht bekannt. Es gibt Anregungen, ein zielgerichtetes Sammeln von einzelnen Faserstückchen auf einer Fläche in einem Harzbad durch Unterdruck zu begünstigen, also einzelne Faserteilchen dadurch anzuziehen. Mit dem vorstehenden erfindungsgemäßen Gedanken eines formhaltigen Aufeinanderfügens von Fasergelegen hat dies jedoch nichts zu tun.

Es hat sich bereits herausgestellt, dass mit der Erfindung bis zu 40 Fasergelegeschichten übereinander definiert abgelegt und in Position festgehalten werden können, wobei sie bei einem Transport ohne Verformung gehandhabt werden können.

Zur Erzielung eines Unterdruckes haben sich bekannte Industriesauger bewährt und auch als ausreichend herausgestellt. Die aufgelegten Fasergelegeschichten aus Fasergelegezuschnitten werden durch den Differenzdruck zwischen normalem Außendruck und erzieltem Innendruck vollflächig an die Oberflächen der Trägerstruktur angepresst, wodurch eine exakte Formung der angestrebten, erwünschten Radien an der Oberseite der Trägerstruktur erreicht wird. Ein auf diese Weise stabilisierter Preformling aus den Fasergelegeschichten kann jetzt qualifiziert zwischengelagert oder durch zusätzliches Nähen weiter verstärkt werden.

Die nach dem Stand der Technik durch das Nähen sonst möglichen Kraterbildungen sind ja erfindungsgemäß vermieden.

Um besonders variabel und zugleich auch kostengünstig Trägerstrukturen mit geeigneten Oberseiten zur Ausbildung auch komplizierterer Formen schaffen zu können, ist es besonders bevorzugt, wenn die Oberseite der Trägerstruktur zusätzlich mit abnehmbaren Aufbauten versehen ist. Diese abnehmbaren Aufbauten können beispielsweise in einer bevorzugten Ausführungsform aus nebeneinander angeordneten Modulen mit dreiseitiger Lochblechabdeckung bestehen, die unten offen sind. Diese Module werden auf einen Basisrahmen mit einem luftdurchlässigen Auflageraster aufgelegt.

Die Oberseite bleibt also insgesamt gasdurchlässig, nämlich einerseits durch das gasdurchlässige Auflageraster und andererseits dadurch, dass auch darüber Lochblechabdeckungen vorliegen. Diese Trägermodule können dann in der gewünschten Anordnung und Form nebeneinander platziert werden und ihre dann aneinander anschließenden Oberseiten bilden dann die Auflagefläche für die Fasergelegeschichten.

Diese Konzeption hat den Vorteil, stets den gleichen Basisrahmen mit luftdurchlässigem Auflageraster für eine Vielzahl unterschiedlicher Formen verwenden zu können. Für jede einzelne Form werden dann die Trägermodule gesondert gefertigt oder aber auch konfektioniert zum Zusammenbau zur Verfügung gestellt, um entsprechende gewünschte Oberflächen bzw. Auflageflächen für die Fasergelegeschichten zur Verfügung stellen zu können.

Die Fasergelegeschichten selbst werden nach der Zusammenstellung der Trägerstruktur einschließlich der Module wie oben beschrieben aufgelegt und durch den im Innenraum der Trägerstruktur also unterhalb des gasdurchlässigen Auflagerasters geschaffenen Unterdruckes angesaugt und vorverdichtet. Auch bei komplizierteren und gewinkelten Strukturen der Module wird hier eine saubere Anlage erzielt.

Unter Aufrechterhaltung des Unterdruckes wird dann die gesamte Anlage einschließlich der Module und der Fasergelegeschichten wie in der ersten Alternative umgekehrt in das Werkzeug eingebracht. Dort wird der Unterdruck abgeschaltet, so dass sich die Fasergelegeschichten wunschgemäß in das Formwerkzeug in der genau gewünschten Form anlegen.

Für das Herausnehmen der Trägerstruktur gibt es zwei Varianten. Zum einen kann vorgesehen werden, dass die Module am Basisrahmen befestigt sind. Sie würden dann nach der Abschaltung des Unterdruckes aufgrund dieser Befestigung am Basisrahmen verbleiben und mit diesem zusammen aus dem Formwerkzeug herausgehoben werden können.

Alternativ ist es auch möglich, dass durchaus mit Absicht diese Module nach Abschalten des Unterdruckes zusammen mit den Fasergelegeschichten im Formwerkzeug zunächst verbleiben. Sie können dann manuell einzeln herausgenommen werden. Diese Vorgehensweise ist zum Beispiel interessant, wenn Hinterschneidungen oder andere komplizierten Formgebungen vorgesehen sind, die ein gleichzeitiges Herausnehmen aller Module zusammen mit dem Basisrahmen kompliziert oder vielleicht auch gar nicht wünschenswert erscheinen lassen.

Es ist auch möglich, gerade bei dem Einsatz solcher Module auf der Trägerstruktur auch schon für die Fasergelegeschichten Stringerpreformen vorzubereiten und mit einzubinden. Diese Stringer oder auch andere entsprechende Verstärkungen können also von vom herein schon in die Fasergelegeschichten bzw. deren Aufbau integriert werden.

Ein weiterer Aspekt, der in einer bevorzugten Ausführungsform realisiert wird, entsteht dadurch, dass durch die gasdurchlässigen Oberflächen, insbesondere die Lochbleche, eine besonders gute Möglichkeit zum Vorsehen von Nähten entsteht.

Während sonst stets Schwierigkeiten bei Fasergelegeschichten durch undefinierte Unterlagen entstehen oder auch Probleme dadurch, dass Nähnadeln nicht in die Unterlagen eindringen können oder dürfen, kann hier definiert an vorher ausgesuchten Löchern in den Lochblechen ein solches Nähen erfolgen. Hierzu bieten sich zum Beispiel gerade die Winkel und Ecken der Trägerstrukturen an; bei denen solche Nähte besonders erwünscht sein können, gerade auch dann, wenn Stringer und Kanten mit vernäht werden sollen.

Dabei entsteht eine weitere Option dann, wenn das Lochraster der positionierten Trägerelemente auf der die Oberfläche bildenden Seite abgescannt wird und als Basisinformation für die Steuerung des Nadeleinstichs dient. So können Nähte ohne spezielle Freiräume relativ frei gewählt werden.

Weitere Vorteile entstehen, wenn die formgebenden Oberflächen neben ihrer Gasdurchlässigkeit noch zusätzlich die Eigenschaft besitzen, mit einer bürstenartigen Auflage belegt zu sein. Durch diese bürstenähnliche Auflage entsteht ein freier Durchstich der Nähnadel und ein definierter Abstand der ersten Fasergelegeschicht von der Oberseite.

Die Ablagekonturen für eine beliebige Formgebung kann nicht nur durch die vorstehend beschriebene Anordnung von Lochblech-Modulen verwirklicht werden, sondern beispielsweise auch durch aneinandergereihte Scheibenelemente. Jedes Scheibenelement kann dabei eine völlig unterschiedliche Form besitzen. Zwischen zwei Scheibenelementen kann ein definierter Zwischenraum vorgesehen werden, der dann die freie Gasströmung, insbesondere Luftströmung, ermöglicht. Auf diese Weise ist es möglich, durch unterschiedliche und jeweils für günstig angesehene Werkstoffe der Scheibenelemente eine geringe Dichte, hohe Steifigkeit und hohe Elastizität zu erzielen.

Interessant können dabei auch geringe Kosten für den Werkstoff sein, oder aber auch ein leichter Formwerkstoff, der einfach zu fräsen ist.

Die erforderliche Gasströmung kann auch durch ein Kanalraster auf der Oberfläche mit Verbindungsbohrungen zur Unterdruckleitung sichergestellt werden.

Besonders zweckmäßig lässt sich die vorliegende Erfindung auch kombinieren mit Fasergelegeschichten, die ganzflächig oder partiell mit einem punktuell wirkenden Binder versehen sind. Durch Heißluftduschen, die von außen oder unter Umständen auch von innen aus dem Unterdruckbereich heraus gegeben werden können, wird dieser Binder lokal geschmolzen und stabilisiert dadurch die Anordnung aus Fasergelegeschichten statt einer Naht oder auch zusätzlich zu einer solchen.

Der Binder wird also durch die Heißluftzufuhr lokal oder aber auch alternativ flächig aktiviert.

Für die längs orientierten Scheibenelemente bieten sich auch Doppelstegplatten an, die einfach und kostengünstig zur Verfügung stehen und einfach nur in die gewünschte Form gebracht werden müssen. Durch die Doppelstege bilden sich automatisch die entsprechenden Strömungskanäle.

Nach oben können die Doppelstegplatten dann wie vorerwähnt auch mit Bürstenvelours abgedeckt werden.

Von besonderem Vorteil ist auch, dass das gesamte Verfahren bei moderaten Temperaturen durchgeführt werden kann. Die Fasergelegeschichten werden ja erst im Formwerkzeug besonders beansprucht und zuvor lediglich durch den Unterdruck beaufschlagt. Diese moderaten Temperaturen können dazu benutzt werden, die Scheiben oder sonstigen Konturen bildenden Elementen aus Materialen zu wählen, die höheren Temperaturen sonst nicht widerstehen und meist besonders kostengünstig sind, zum Beispiel als handelsübliche Doppelstegplatten aus Polycarbonat. Zusätzlich können aber auch Profilbleche verwendet werden oder aber auch Kombinationen aus diesen Doppelstegplatten mit Profilblechen, die dann mittels Verklebung zu einem leichten, steifen und handhabungsfreundlichen Modul führen.

Als weitere Option wird es möglich, quergeschnittene Zuschnitte aus Doppelstegplatten durch versetztes Verkleben, also gewissermaßen als Ziegelverbund, zu Blockmodulen mit großen Maßvorgaben zu fügen.

Diese Blockmodule können dann gruppiert auf einer CNC-Anlage konturgefräst werden.

Im Folgenden werden anhand der Zeichnungen einige Ausführungsbeispiele der Erfindung näher beschreiben. Es zeigen:
- **Figur 1**: einen Schnitt durch ein Formwerkzeug mit herkömmlich aufgelegten Fasergelegeschichten;
- **Figur 2**: eine schematische Darstellung einer Trägerstruktur gemäß der Erfindung;
- **Figur 3**: einen ersten Verfahrensschritt unter Verwendung der Trägerstruktur aus Figur 2;
- **Figur 4**: einen zweiten Verfahrensschritt mit der Trägerstruktur nach Figur 2;
- **Figur 5**: einen dritten Verfahrensschritt mit der Trägerstruktur nach Figur 2;
- **Figur 6**: eine vergrößerte Darstellung einer modifizierten Ausführungsform;
- **Figur 7**: ein weiterer Verfahrensschritt bei der Ausführungsform nach Figur 6;
- **Figur 8**: ein dritter Verfahrensschritt bei der Ausführungsform nach Figur 6
- **Figur 9**: ein erster Verfahrensschritt bei einer Variante der Ausführungsform nach Figur 6;
- **Figur 10**: ein zweiter Verfahrensschritt bei einer Variante nach Figur 9;
- **Figur 11**: eine weitere Ausführungsform der Erfindung;
- **Figur 12**: eine Variante der Ausführungsform aus Figur 11; und
- **Figur 13**: ein Detail einer Ausführungsform

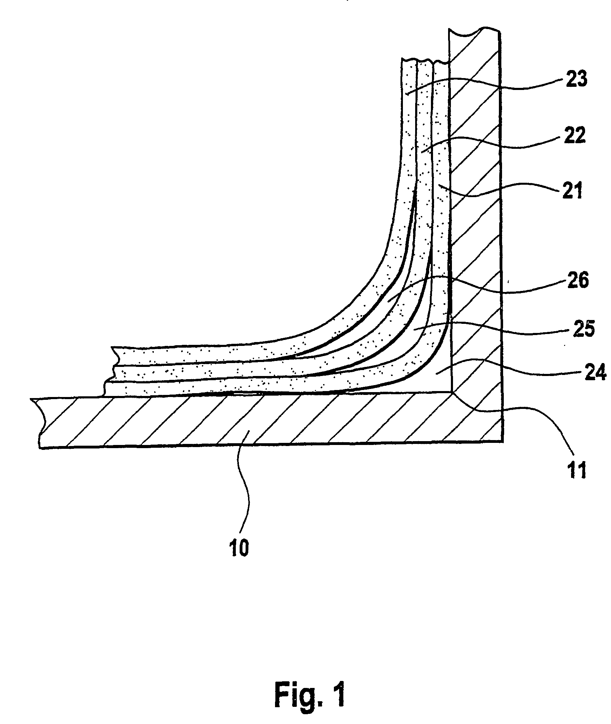

**Figur 1** zeigt sehr plastisch ein Problem, dass herkömmlich bei der Herstellung von Bauelementen aus Faserverbundwerkstoffen auftreten kann. Zu erkennen ist ein Formwerkzeug 10, das hier einen rechten Winkel 11 besitzt. Dieses Formwerkzeug 10 mit seinem Winkel 11 dient also dazu, hier ein rechtwinkliges Bauelement aufzunehmen bzw. dieses Bauelement zu formen. Zu diesem Zweck werden nacheinander mehrere Fasergelegeschichten 21, 22 und 23 in das Formwerkzeug 10 eingelegt. Diese Fasergelegeschichten 21, 22 und 23 sind flächige Strukturen aus Fasern, die die Tendenz haben, wieder ihre ursprüngliche, langgestreckte Form anzunehmen. Werden diese Fasergelegeschichten also in eine nicht vollkommen ebene Form gelegt, so besitzen sie die Tendenz, diese vollkommen ebene Form möglichst wieder anzustreben, wenn sie nicht durch äußere Kräfte daran gehindert werden.

Das führt beim Einlegen in einen spitzen oder auch rechten Winkel 11 wie in der Figur 1 dazu, dass sich selbst bei sorgfältigem Hineinlegen der Fasergelegeschicht 21 in die Ecke 11 des Formwerkzeugs 10 eine unausgefüllte Ecke 24 im äußersten Winkel 11 bildet. Dies allein wäre noch durch entsprechendes Berücksichtigen der entstehenden runden Außenform des Bauelements kalkulierbar. Beim Hineinlegen der nächsten Fasergelegeschicht 22 jedoch bildet sich zwischen der Fasergelegeschicht 21 und der Fasergelegeschicht 22 erneut ein Zwischenraum, und zwar ein sichelförmiger Hohlraum 25. Gleiches geschieht beim Hineinlegen der dritten Fasergelegeschicht 23, wobei sich zwischen der Fasergelegeschicht 22 und der Fasergelegeschicht 23 erneut ein sichelförmiger Hohlraum 26 bildet.

Diese sichelförmigen Hohlräume 25, 26, sowie weitere, die sich beim Ablegen zusätzlicher Fasergelegeschichten bilden würden, führen zu einer Schwächung der Struktur des entstehenden Bauelements, da diese sichelförmigen Hohlräume dann entweder nur harzgetränkt oder überhaupt potentielle Gasblasen bildend verbleiben.

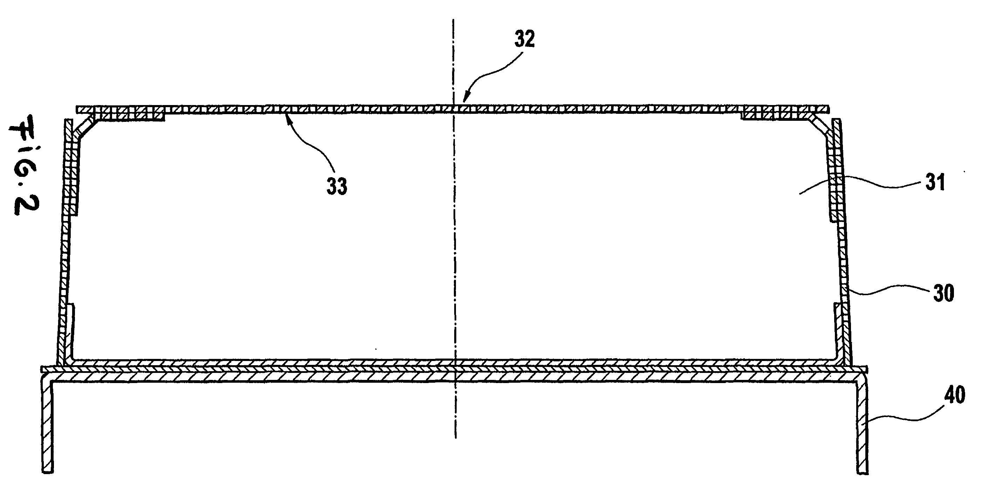

Hier nun schafft die in den Figuren 2 bis 5 in einer ersten Ausführungsform dargestellte Erfindung Abhilfe.

**Figur 2** zeigt schematisch eine Trägerstruktur 30. Auf einem Tisch 40 ist eine biegesteife, konvexe und ungefähr im Querschnitt rechteckige Trägerstruktur 30 aufgebaut. Diese Trägerstruktur 30 besitzt einen Innenraum 31 und eine Oberseite 32. Die Unterseite liegt benachbart zum Tisch 40. Der Innenraum 31 ist (hier nicht dargestellt) mit einem Gebläse verbunden und kann daher unter Unterdruck im Verhältnis zum Außenraum gesetzt werden. Die Oberseite 32 weist ein Lochblech 33 mit Löchern 34 auf. Durch diese Löcher 34 wird das Lochblech 33 und damit die Oberseite 32 gasdurchlässig, insbesondere luftdurchlässig. Auch die die Oberseite 32 und die Unterseite verbindenden Seitenwände 35 und 36 sind hier als Lochblech ausgestaltet. Es ist auch nicht erforderlich, dass die Oberseite 32 der Trägerstruktur 30 genau eben ist; auch andere Strukturen sind hier möglich.

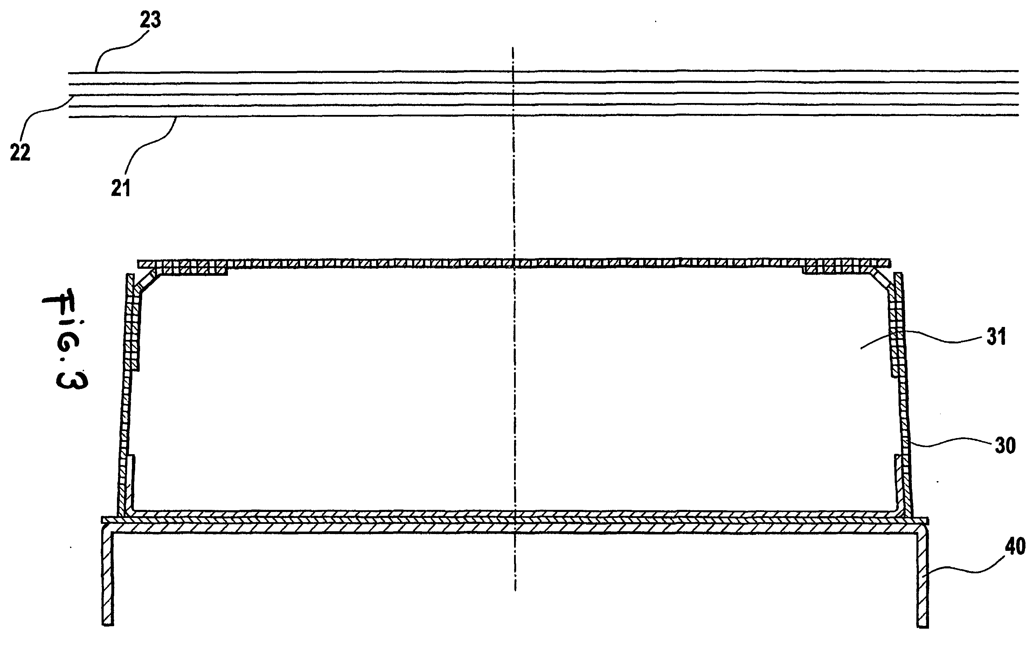

**Figur 3** zeigt nun den ersten Verfahrensschritt bei der Benutzung der Trägerstruktur 30. Diese wird wie erwähnt in ihrem Innenraum 31 mit Unterdruck versehen, in dem das Gebläse die dort enthaltene Luft entfernt. Danach werden Fasergelegeschichten, die hier schematisch angedeutet sind, aufgelegt. Dieses Auflegen erfolgt bevorzugt nacheinander.

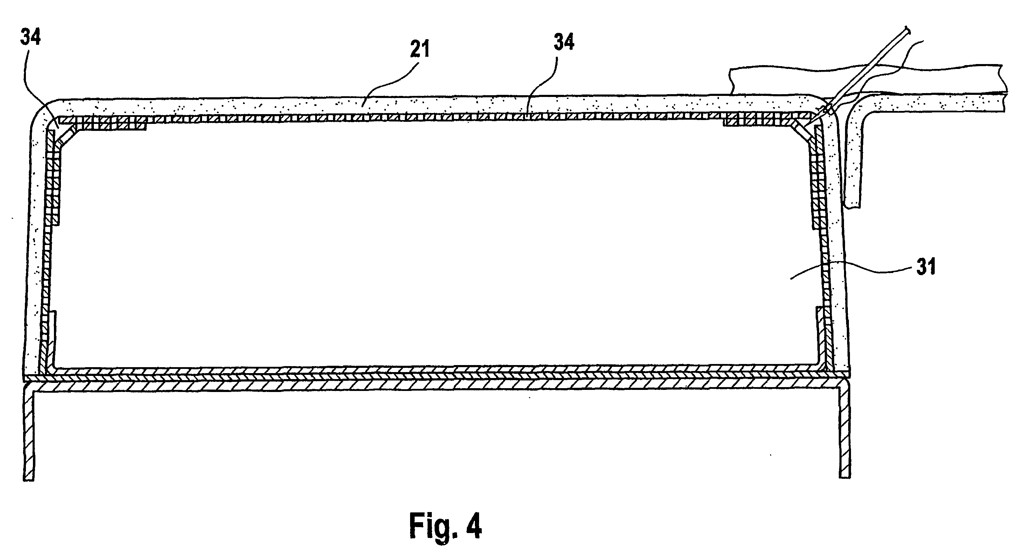

**Figur 4** zeigt den nächsten Verfahrensschritt. Hier liegen nun die Fasergelegeschichten 21, 22, 23 außen um die Trägerstruktur 30 herum, wobei der Unterdruck im Innenraum 31 unverändert anhält.

Außen um die aufgelegten Fasergelegeschichten kann noch zusätzlich eine Folienabdeckung vorgesehen werden, um die Fasergelegeschichten nachzutrocknen.

In der rechten oberen Ecke ist noch eine Variante angedeutet, die in den anderen drei Figuren fortgelassen ist. Es können nämlich die Löcher 34 in den Lochblechen 33 oder aber auch weitere zusätzliche Ausnehmungen dazu genutzt werden, mittels einer schematisch angedeuteten Näheinrichtung die Fasergelegeschichten 21, 22, 23 miteinander zu vernähen. Da hier der Bereich unterhalb der Fasergelegeschichten problemlos zugänglich ist, kann hier ein Durchstechen der Nadeln durch alle Fasergelegeschichten erfolgen, anders als bei herkömmlichen Nähaktionen.

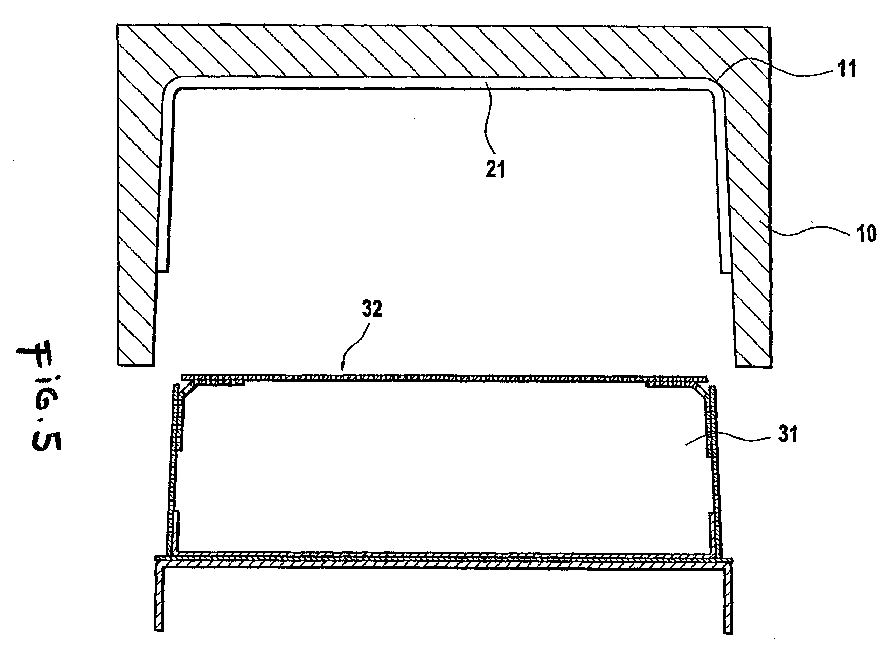

**Figur 5** zeigt, wie anschließend die Trägerstruktur 30 mit nach wie vor aufgelegten Fasergelegeschichten 21, 22, 23 um 180° gedreht in das Formwerkzeug 10 eingeführt wurde. Dann wurde der Unterdruck im Innenraum 31 abgeschaltet und durch einen Überdruck ersetzt. Damit entfiel die Haltekraft auf die Fasergelegeschichten, die sich von der Trägerstruktur 30 aufgrund ihrer Schwerkraft lösten. Sie legten sich damit aufgrund der Form sofort auf die Innenkontur des Formwerkzeugs 10 an.

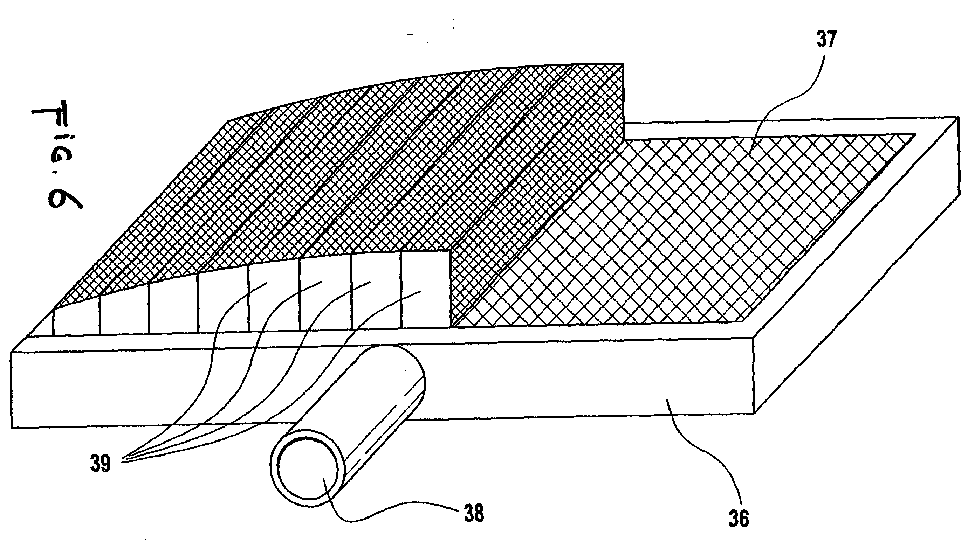

**Die Figuren 6 ff.** zeigen eine Variante des Vorgehens. Hierbei wird nun eine Trägerstruktur 30 benutzt, die einen Basisrahmen 36 mit einem gasdurchlässigen Auflageraster 37 besitzt. Zu erkennen ist auch ein Anschluss 38 zum Sauggebläse zur Erzeugung des Unterdrucks.

Auf das Auflageraster 37 auf dem Basisrahmen 36 werden nun Trägermodule 39 aufgelegt. Diese Trägermodule 39 besitzen in der dargestellten Ausführungsform auf drei Seiten eine Lochblechabdeckung. Sie sind unten offen. Ihre Form ist in etwa quaderförmig, wobei wie deutlich in der Figur 6 zu erkennen die Oberseite an die gewünschte Gesamtkontur anpassbar ist. Diese Form entspricht dann der Innenkontur des hier nicht dargestellten Formwerkzeugs 10.

In der Figur 6 sind bereits acht Trägermodule 39 aufgelegt, die weiteren fehlen noch. Dadurch kann man das Auflageraster 37 gut erkennen, das natürlich nur schematisch dargestellt ist und die für Luft (oder ggf. ein anderes Gas) durchlässige Struktur erkennen lässt.

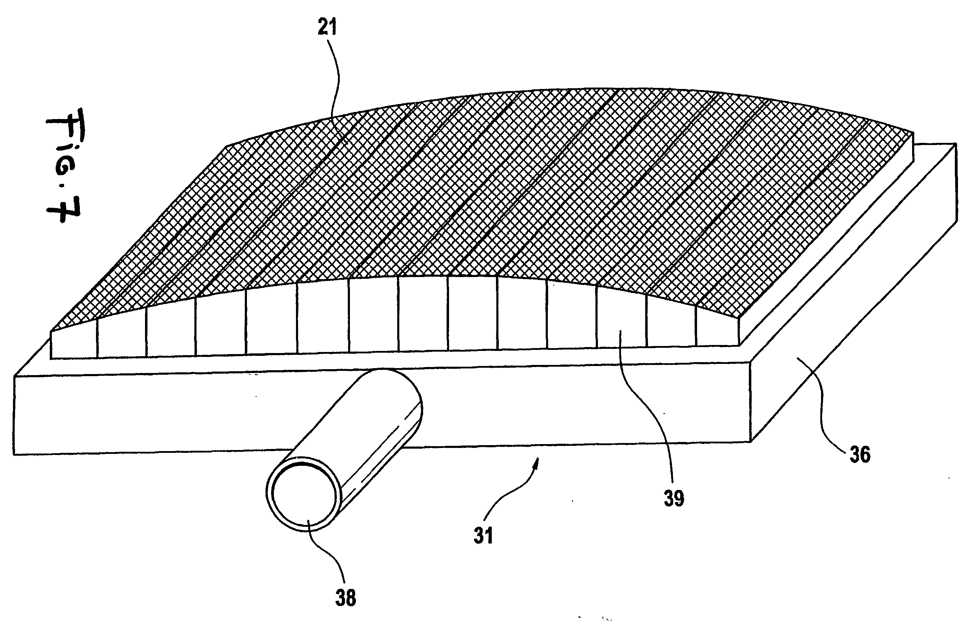

**Figur 7** zeigt diese Ausführungsform, nachdem sämtliche hier insgesamt 14 Trägermodule 39 aufgelegt sind. Jetzt ist auf diese Trägermodule 39 auch bereits eine der Fasergelegeschichten 21, 22, 23 zusätzlich aufgelegt und aufgrund des Unterdrucks innerhalb der Trägerstruktur 30, also unterhalb des Basisrahmens 36 vorverdichtet und angesaugt.

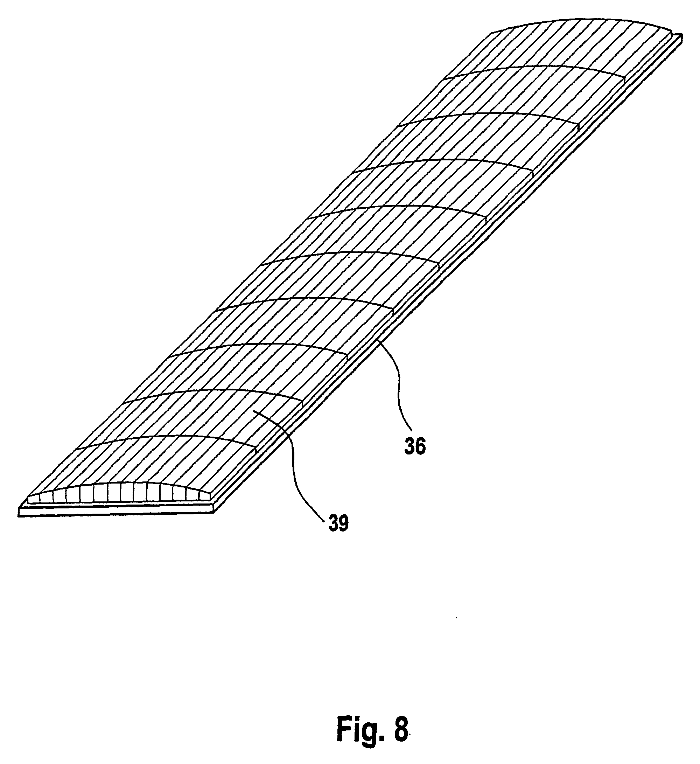

**Figur 8** zeigt eine noch größere Darstellung, in der nun auch in einer weiteren Richtung solche Trägermodule 39 zusätzlich aufgelegt sind. Auch hier ist wiederum der Basisrahmen 36 zu erkennen, mit entsprechend größerer Dimensionierung.

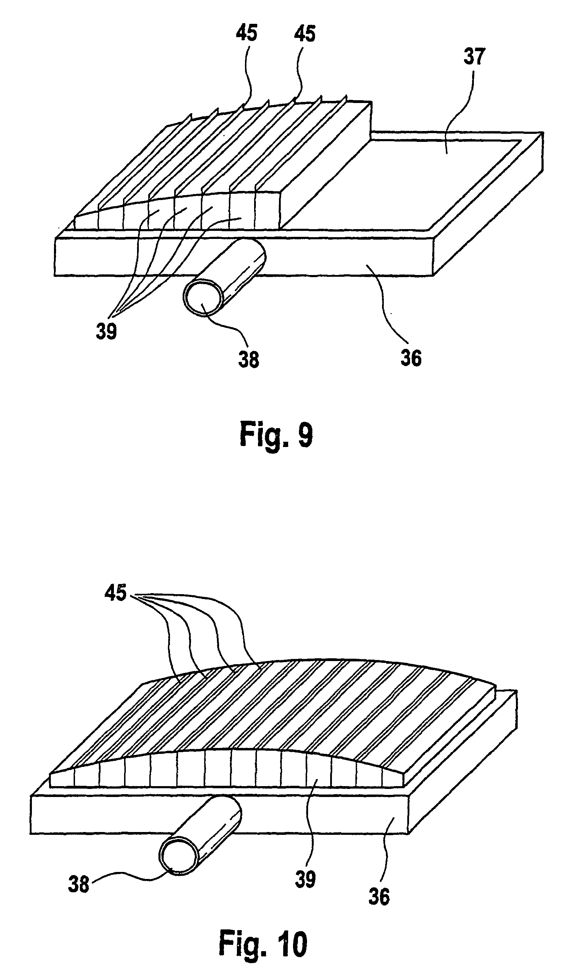

**Figur 9** zeigt schematisch einen Zwischenschritt, der mit einer Ausführungsform nach der Figur 6 durchgeführt werden kann. Hier ist zwischen den einzelnen Modulen 39 jeweils noch eine Einlegung von Stringerpreforms 45 vorgesehen. Diese können ohne weiteres an geeigneter Stelle eingefügt und auch umgeklappt werden, um spätere Verstärkungsstrukturen im fertigen Bauteil zu schaffen. Dabei zeigt Figur 9, wie entsprechend der vorgesehenen Stringerteilung modular strukturierte Kastenelemente, also wiederum die Module 39, mit einer formgebenden Seite auf dem Basisrahmen 36 so positioniert werden, dass die Stringerstege immer zwischen den Modulen 39 fixiert sind. Durch den wirksamen Differenzdruck nach Anlegung des Unterdrucks im Innenraum 31 der Trägerstruktur 30 werden die Module 39 in Position gehalten.

**Figur 10** zeigt, wie nach dem vollständigen Aufsetzen aller Module 39 die auf dem Stringerfuß sich bildenden Fasergelegeschichten umgeschlagen und mittels Differenzdruck auf den Saugflächen gehalten werden.

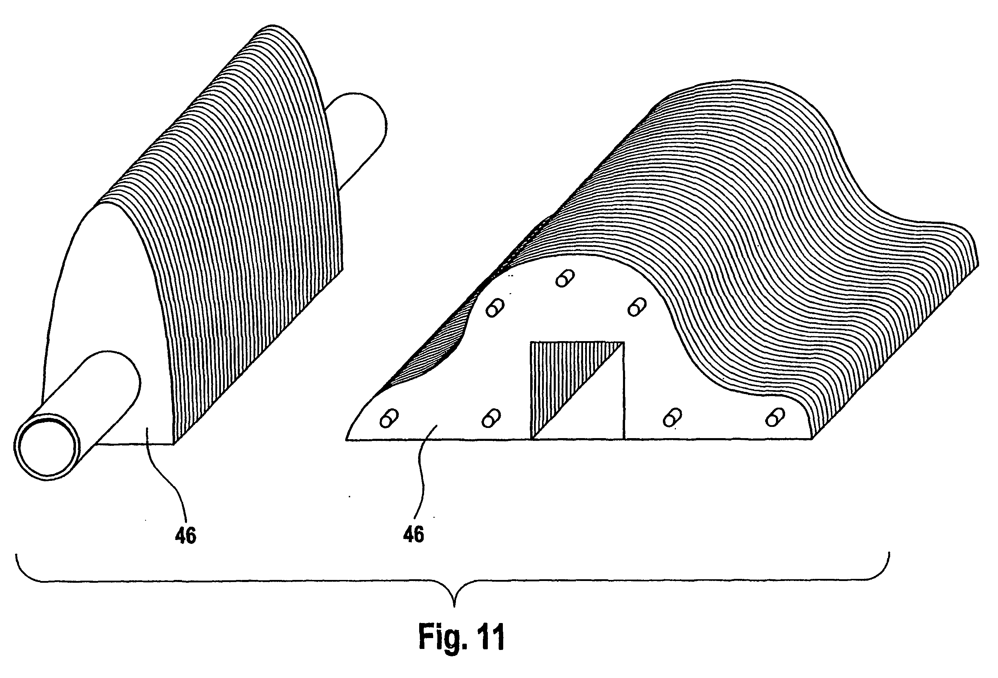

**Figur 11** zeigt schließlich, dass noch weitere Möglichkeiten bestehen, Insbesondere sphärisch gekrümmte Oberflächen können durch in definierten Abständen aufgereihte Scheibenelemente 46 als Modul 39 mit den Oberflächenmantellinien entsprechenden Konturen vorgesehen werden. Diese werden dann ebenso wie die in der Ausführungsform nach Figur 6 gezeigten Module auf dem Auflageraster 37 aufgelegt.

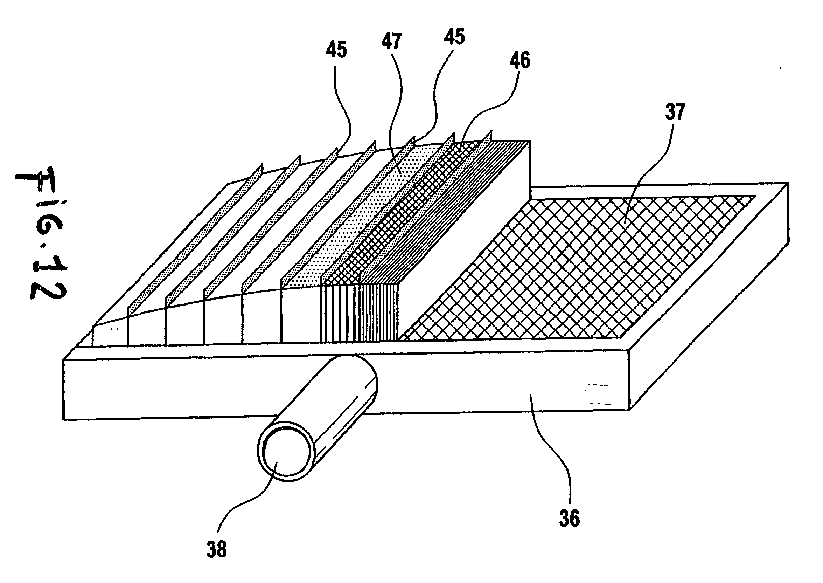

**Figur 12** zeigt schließlich noch, wie solche durch längsorientierte Scheibenelemente 46 definierte Module 39 aneinander gelegt und auf das Auflageraster 37 platziert werden. Dabei sind hier als Beispiel auch Module 39 aus gefügten Doppelstegplatten aufgebaut. In einer der Varianten ist auch vorgesehen, dass diese Module 39 dann mit Bürstenvelours nach oben abgedeckt sind.

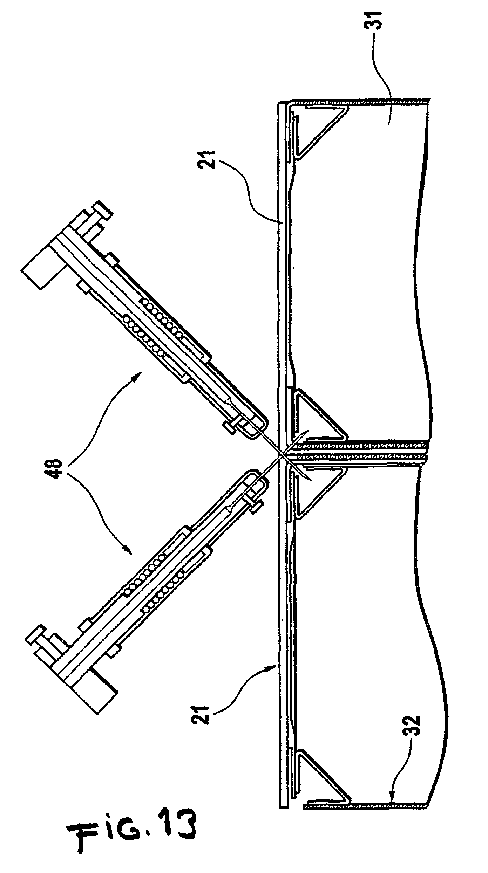

In einer letzten **Figur 13** ist noch angedeutet, wie ein Nähkopf 48 eingesetzt werden kann, um ein strukturelles Nähen bei der Herstellung von dreidimensional verstärkten Faserverbundstrukturen besonders vorteilhaft vornehmen zu können. Dabei können die Nähköpfe ganz besonders in Fügeprofile in den Ecken der Trägerstrukturen bzw. Module 39 zum Einsatz kommen und Stringer und Hautschichten genauso miteinander vernähen, wie dies gewünscht ist.

### Bezugszeichenliste

- 10: Formwerkzeug
- 11: rechter Winkel

- 21: Fasergelegeschicht
- 22: Fasergelegeschicht
- 23: Fasergelegeschicht
- 24: unausgefüllte Ecke
- 25: sichelförmiger Hohlraum
- 26: sicheiförmiger Hohlraum

- 30: Trägerstruktur
- 31: Innenraum der Trägerstruktur
- 32: Oberseite der Trägerstruktur
- 33: Lochblech
- 34: Löcher im Lochblech
- 36: Basisrahmen
- 37: Auflageraster
- 38: Anschluss zum Sauggebläse
- 39: Trägermodule

- 40: Tisch
- 45: Stringerpreforms
- 46: Scheibenelemente
- 48: Nähkopf

## Patentansprüche

1. Verfahren zum Einbringen von Fasergelegeschichten (21, 22, 23) in Formwerkzeuge (10) beim Herstellen von Bauelementen aus Faserverbundwerkstoffen, bei dem
- eine biegesteife Trägerstruktur (30) mit einer gasdurchlässigen Oberseite (32) versehen wird, deren äußere Kontur der inneren Kontur des Formwerkzeuges (10) für das Bauelement entspricht, wobei die Dimensionierung um die Wandstärke des Bauelementes kleiner ist als die Innere Kontur des Formwerkzeuges (10),
- der Innenraum (31) der Trägerstruktur (30) in Unterdruck relativ zum äußeren Druck versetzt wird,
- nacheinander mehrere Fasergelegeschichten (21, 22, 23) auf der gasdurchlässigen Oberseite (32) der Trägerstruktur (30) abgelegt werden,
- die Trägerstruktur (30) mit den aufgelegten Fasergelegeschichten (21, 22, 23) bei weiterhin im Innenraum (31) der Trägerstruktur (30) herrschendem Unterdruck in das Formwerkzeug (10) eingeführt wird, so dass die Fasergelegeschichten (21, 22, 23) zwischen der inneren Kontur des Formwerkzeugs (10) und der äußeren Kontur der Oberseiten (32) der Trägerstruktur (30) angeordnet sind,
- der Unterdruck im Innenraum (31) der Trägerstruktur (30) abgeschaltet und
- die Trägerstruktur (30) aus dem Formwerkzeug (10) herausgenommen wird.

2. Verfahren nach Anspruch 1,
**dadurch gekennzeichnet,**
**dass** nach dem Einbringen der Trägerstruktur (30) in das Formwerkzeug (10) im Innenraum (31) der Trägerstruktur (30) ein Überdruck erzeugt wird.

3. Verfahren nach Anspruch 1 oder 2,
**dadurch gekennzeichnet,**
**dass** die Oberseite (32) der biegesteifen Trägerstruktur (30) ein Lochblech (33) aufweist.

4. Verfahren nach einem der vorstehenden Ansprüche,
**dadurch gekennzeichnet,**
**dass** eine Vernähung der Fasergelegeschichten nach dem Auflegen auf die Trägerstruktur (30) und vor dem Einbringen in das Formwerkzeug (10) erfolgt, wobei die Vernähung durch Einführung einer Nähnadel in Ausnehmungen bzw. Löcher (34) in der gasdurchlässigen Oberseite (32) der Trägerstruktur (30) erfolgt.

5. Verfahren nach einem der vorstehenden Ansprüche,
**dadurch gekennzeichnet,**
**dass** die Fasergelegeschichten (21, 22, 23) mit einem aktivierbaren Bindemittel imprägniert werden, und dass dieses nach dem Auflegen der Fasergelegeschichten (21, 22, 23) auf die Trägerstruktur (30) und vor dem Einbringen der Trägerstruktur (30) in das Formwerkzeug (10) durch Hitzeeinwirkung lokal oder flächig aktiviert wird.

6. Verfahren nach einem der vorstehenden Ansprüche,
**dadurch gekennzeichnet,**
**dass** die Trägerstruktur (30) mit einem Basisrahmen und darauf aufgesetzten gasdurchlässigen Modulen als Oberseite und darauf aufgelegten Fasergelegeschichten (21, 22, 23) in das Formwerkzeug (10) eingelegt wird, dort der Unterdruck im Innenraum (31) der Trägerstruktur (30) abgeschaltet wird und nur der Basisrahmen der Trägerstruktur (30) ohne die aufgelegten Module in einem ersten Arbeitsschritt heraus genommen wird, und dass dann die aufgelegten und nach Aufhebung des Unterdrucks gelösten Module separat herausgenommen werden.

7. Anordnung zum Einbringen von Fasergelegeschichten (21, 22, 23) in Formwerkzeuge (10) beim Herstellen von Bauelementen aus Faserverbundwerkstoffen, bei der
- eine biegesteife Trägerstruktur (30) mit einer gasdurchlässigen Oberseite (32) versehen ist, deren äußere Kontur der inneren Kontur des Formwerkzeuges (10) für das Bauelement entspricht, wobei die Dimensionierung um die Wandstärke des Bauelementes kleiner ist als die innere Kontur des Formwerkzeuges (10),
- der Innenraum (31) der Trägerstruktur (30) in Unterdruck relativ zum äußeren Druck versetzbar ist,
- eine Ablage von mehreren Fasergelegeschichten (21, 22, 23) auf der gasdurchlässigen Oberseite (32) der Trägerstruktur (30) vorgesehen ist,
- die Trägerstruktur (30) mit den aufgelegten Fasergelegeschichten (21, 22, 23) bei weiterhin im Innenraum (31) der Trägerstruktur (30) herrschenden Unterdruck in das Formwerkzeug (10) eingeführt wird, so dass die Fasergelegeschichten zwischen der inneren Kontur des Formwerkzeuges (10) und der äußeren Kontur der Oberseiten (32) der Trägerstruktur (30) angeordnet sind,
- der Unterdruck im Innenraum (31) der Trägerstruktur (30) abschaltbar ist und
- die Trägerstruktur (30) aus dem Formwerkzeug (10) herausnehmbar ist.

8. Anordnung nach Anspruch 7,
**dadurch gekennzeichnet,**
**dass** die Oberseite (32) mit einem Lochblech (33) versehen ist.

9. Anordnung nach Anspruch 7 oder 8,
**dadurch gekennzeichnet,**
**dass** die Trägerstruktur (30) einen Basisrahmen mit einem gasdurchlässigen Raster aufweist, auf welches gasdurchlässige Module auflegbar sind, deren Oberfläche der inneren Kontur des Formwerkzeugs (10) angepasst ist.

10. Anordnung nach einem der Ansprüche 7 bis 9,
**dadurch gekennzeichnet,**
**dass** die gasdurchlässigen Module aus quaderähnlichen Elementen bestehen, die zumindest nach oben, bevorzugt aber auch zu einer oder mehreren Seiten hin Lochbleche aufweisen und nach unten offen oder zumindest gasdurchlässig sind.

11. Anordnung nach einem der Ansprüche 7 bis 10,
**dadurch gekennzeichnet,**
**dass** die Module aus scheibenförmigen Elementen zusammengesetzt sind, wobei die Flächensenkrechte auf die Scheibenstrukturen der scheibenähnlichen Elemente parallel zu den gasdurchlässigen Rastern des Basisrahmens verlaufen.

12. Anordnung nach dem bisherigen Anspruch 11,
**dadurch gekennzeichnet,**
**dass** die scheibenförmigen Elemente Doppelstegplatten sind, wobei die Stege senkrecht auf der Oberfläche des Rasters des Basisrahmens angeordnet sind.

13. Anordnung nach einem der Ansprüche 9 bis 12,
**dadurch gekennzeichnet,**
**dass** die Module lösbar am Basisrahmen befestigt sind.

14. Anordnung nach einem der Ansprüche 7 bis 13,
**dadurch gekennzeichnet,**
**dass** Näheinrichtungen vorgesehen sind, die ausgerichtet auf das Lochraster der Module oder der Lochbleche die Nadeleinstiche für die Nähte vornehmen.

15. Anordnung nach einem der Ansprüche 7 bis 14,
**dadurch gekennzeichnet,**
**dass** die gasdurchlässigen Oberflächen mit bürstenartigen Auflagen belegt sind.

## Claims

1. Method of inserting prepreg layers (21, 22, 23) into shaping tools (10) when manufacturing components made of fibre composites, whereby
- a bending-resistant support structure (30) is provided with a gas-permeable upper side (32), the external contour of which corresponds to the internal contour of the shaping tool (10) for the component, wherein the dimensioning is smaller by the wall thickness of the component than the internal contour of the shaping tool (10),
- the interior (31) of the support structure (30) is set to a negative pressure relative to the external pressure,
- a plurality of prepreg layers (21, 22, 23) are deposited successively on the gas-permeable upper side (32) of the support structure (30),
- while a negative pressure still prevails in the interior (31) of the support structure (30), the support structure (30) with the applied prepreg layers (21, 22, 23) is introduced into the shaping tool (10) so that the prepreg layers (21, 22, 23) are disposed between the internal contour of the shaping tool (10) and the external contour of the upper sides (32) of the support structure (30),
- the negative pressure in the interior (31) of the support structure (30) is discontinued and
- the support structure (30) is removed from the shaping tool (10).

2. Method according to claim 1,
**characterized in**
**that** after introduction of the support structure (30) into the shaping tool (10) a positive pressure is generated in the interior (31) of the support structure (30).

3. Method according to claim 1 or 2,
**characterized in**
**that** the upper side (32) of the bending-resistant support structure (30) comprises a perforated sheet (33).

4. Method according to one of the preceding claims,
**characterized in**
**that** the prepreg layers, after being laid onto the support structure (30) and before being introduced into the shaping tool (10), are sewn up, wherein the sewing-up is effected by introducing a sewing needle into recesses and/or holes (34) in the gas-permeable upper side (32) of the support structure (30).

5. Method according to one of the preceding claims,
**characterized in**
**that** the prepreg layers (21, 22, 23) are impregnated with an activatable bonding agent, and that said bonding agent is locally or areally activated by the effect of heat after the prepreg layers (21, 22, 23) have been laid onto the support structure (30) and before the support structure (30) is introduced into the shaping tool (10).

6. Method according to one of the preceding claims,
**characterized in**
**that** the support structure (30) with a base frame and gas-permeable modules mounted thereon as an upper side and prepreg layers (21, 22, 23) laid thereon is inserted into the shaping tool (10), there the negative pressure in the interior (31) of the support structure (30) is discontinued and only the base frame of the support structure (30) without the modules laid thereon is removed in a first operating step, and that then the modules, which were laid thereon and have detached themselves after discontinuation of the negative pressure, are removed separately.

7. Arrangement for inserting prepreg layers (21, 22, 23) into shaping tools (10) when manufacturing components made of fibre composites, in which
- a bending-resistant support structure (30) is provided with a gas-permeable upper side (32), the external contour of which corresponds to the internal contour of the shaping tool (10) for the component, wherein the dimensioning is smaller by the wall thickness of the component than the internal contour of the shaping tool (10),
- the interior (31) of the support structure (30) is settable to a negative pressure relative to the external pressure,
- a stack comprising a plurality of prepreg layers (21, 22, 23) is provided on the gas-permeable upper side (32) of the support structure (30),
- while a negative pressure still prevails in the interior (31) of the support structure (30), the support structure (30) with the applied prepreg layers (21, 22, 23) is introduced into the shaping tool (10) so that the prepreging layers (21, 22, 23) are disposed between the internal contour of the shaping tool (10) and the external contour of the upper sides (32) of the support structure (30),
- the negative pressure in the interior (31) of the support structure (30) is discontinuable and
- the support structure (30) is removable from the shaping tool (10).

8. Arrangement according to claim 7,
**characterized in**
**that** the upper side (32) is provided with a perforated sheet (33).

9. Arrangement according to claim 7 or 8,
**characterized in**
**that** the support structure (30) comprises a base frame with a gas-permeable grid, onto which gas-permeable modules are placeable, the surface of which is adapted to the internal contour of the shaping tool (10).

10. Arrangement according to one of claims 7 to 9,
**characterized in**
**that** the gas-permeable modules comprise cuboid-like elements, which at least in an upward direction, but preferably also towards one or more sides have perforated sheets and are open or at least gas-permeable in a downward direction.

11. Arrangement according to one of claims 7 to 10,
**characterized in**
**that** the modules are composed of disk-shaped elements, wherein the surface perpendicular to the disk structures of the disk-like elements extend parallel to the gas-permeable grids of the base frame.

12. Arrangement according to the preceding claim 11,
**characterized in**
**that** the disk-shaped elements are double-webbed plates, wherein the webs are disposed perpendicular to the surface of the grid of the base frame.

13. Arrangement according to one of claims 9 to 12,
**characterized in**
**that** the modules are fastened detachably to the base frame.

14. Arrangement according to one of claims 7 to 13,
**characterized in**
**that** sewing devices are provided, which effect the needle insertions for the seams in alignment with the hole grid of the modules or of the perforated sheets.

15. Arrangement according to one of claims 7 to 14,
**characterized in**
**that** the gas-permeable surfaces are lined with brush-like coatings.

## Revendications

1. Procédé destiné à introduire des couches préimprégnées de fibres (21, 22, 23) dans des moules (10) lors de la fabrication d'éléments de construction en matériaux composites renforcés par fibres, dans lequel
- une structure de support (30), résistante à la flexion, est munie d'une paroi supérieure (32) perméable aux gaz, dont le contour extérieur correspond au contour intérieur du moule (10) pour l'élément de construction, le dimensionnement étant inférieur au contour intérieur du moule (10) de la valeur de l'épaisseur de paroi de l'élément de construction,
- le volume intérieur (31) de la structure de support (30) est mis sous dépression par rapport à la pression extérieure,
- des couches préimprégnées de fibres (21, 22, 23) sont déposées successivement sur la paroi supérieure (32), perméable aux gaz, de la structure de support (30),
- pendant que la dépression continue à régner dans le volume intérieur (31) de la structure de support (30), la structure de support (30) avec les couches préimprégnées de fibres (21, 22, 23) déposées sur celle-ci sont introduites dans le moule (10), de telle sorte que les couches préimprégnées de fibres (21, 22, 23) sont agencées entre le contour intérieur du moule (10) et le contour extérieur de la paroi supérieure (32) de la structure de support (30),
- la dépression est interrompue dans le volume intérieur (31) de la structure de support (30) et
- la structure de support (30) est retirée hors du moule (10).

2. Procédé selon la revendication 1, **caractérisé en ce qu'**une dépression est générée dans le volume intérieur (31) de la structure de support (30) après l'introduction de la structure de support (30) dans le moule (10).

3. Procédé selon la revendication 1 ou 2, **caractérisé en ce que** la paroi supérieure (32) de la structure de support (30) résistante à la flexion comporte une tôle perforée (33).

4. Procédé selon l'une quelconque des revendications précédentes, **caractérisé en ce que** les couches préimprégnées de fibres sont cousues entre elles une fois qu'elles sont posées sur la structure de support (30) et avant qu'elles soient introduites dans le moule (10), la couture étant réalisée par l'introduction d'une aiguille à coudre dans des évidements ou trous (34) dans la paroi supérieure (32), perméable aux gaz, de la structure de support (30).

5. Procédé selon l'une quelconque des revendications précédentes, **caractérisé en ce que** les couches préimprégnées de fibres (21, 22, 23) sont imprégnées d'un liant activable et **en ce que** ce liant est activé par un apport thermique localement ou sur toute la surface après la pose des couches préimprégnées de fibres (21, 22, 23) sur la structure de support (30) et avant l'introduction de la structure de support (30) dans le moule (10).

6. Procédé selon l'une quelconque des revendications précédentes, **caractérisé en ce que** la structure de support (30) est introduite dans le moule (10) avec un cadre de base et des modules perméables aux gaz, posés sur celui-ci et formant la paroi supérieure, et avec les couches préimprégnées de fibres (21, 22, 23) déposées sur cette dernière, la dépression dans le volume intérieur (31) de la structure de support (30) est alors interrompue et seul le cadre de base de la structure de support (30), sans les modules posés sur celui-ci, est retiré hors du moule pendant une première étape de travail, et **en ce que**, ensuite, les modules posés sur ledit cadre et désolidarisés après la suppression de la dépression sont retirés séparément du moule.

7. Dispositif destiné à introduire des couches préimprégnées de fibres (21, 22, 23) dans des moules (10) lors de la fabrication d'éléments de construction en matériaux composites renforcés par fibres, dans lequel
- une structure de support (30), résistante à la flexion, est munie d'une paroi supérieure (32) perméable aux gaz, dont le contour extérieur correspond au contour intérieur du moule (10) pour l'élément de construction, le dimensionnement étant inférieur au contour intérieur du moule (10) de la valeur de l'épaisseur de paroi de l'élément de construction,
- le volume intérieur (31) de la structure de support (30) peut être mis sous dépression par rapport à la pression extérieure,
- une application successive de couches préimprégnées de fibres (21, 22, 23) sur la paroi supérieure (32), perméable aux gaz, de la structure de support (30), est prévue,
- la structure de support (30) avec les couches préimprégnées de fibres (21, 22, 23) déposées sur cette dernière sont insérées dans le moule (10) de sorte que les couches préimprégnées de fibres (21,22,23) soient agencées entre le contour intérieur du moule (10) et le contour extérieur de la paroi supérieure (32) de la structure de support (30), alors que la dépression continue à régner dans le volume intérieur (31) de la structure de support (30),
- la dépression peut être interrompue dans le volume intérieur (31) de la structure de support (30) et
- la structure de support (30) est destinée à être retirée hors du moule (10).

8. Dispositif selon la revendication 7, **caractérisé en ce que** la paroi supérieure (32) est munie d'une tôle perforée (33).

9. Dispositif selon la revendication 7 ou 8, **caractérisé en ce que** la structure de support (30) comporte un cadre de base avec une trame perméable aux gaz, sur lequel peuvent être posés des modules perméables aux gaz, dont la surface est adaptée au contour intérieur du moule (10).

10. Dispositif selon l'une quelconque des revendications 7 à 9, **caractérisé en ce que** les modules perméables aux gaz sont formés par des éléments parallélépipédiques qui, au moins sur le dessus, mais de préférence aussi sur un ou plusieurs côtés, comportent des tôles perforées et qui sont ouverts vers le bas ou sont au moins perméables aux gaz.

11. Dispositif selon l'une quelconque des revendications 7 à 10, **caractérisé en ce que** les modules sont formés par des éléments en forme de flans, les normales de surface sur les structures des éléments en forme de flans étant parallèles aux trames perméables aux gaz du cadre de base.

12. Dispositif selon la revendication 11 actuelle, **caractérisé en ce que** les éléments en forme de flans sont des plaques à doubles nervures, les nervures étant orientées perpendiculairement à la surface de la trame du cadre de base.

13. Dispositif selon l'une quelconque des revendications 9 à 12, **caractérisé en ce que** les modules sont fixés de manière amovible contre le cadre de base.

14. Dispositif selon l'une quelconque des revendications 7 à 13, **caractérisé en ce qu'**il est prévu des dispositifs de couture qui, alignés sur le réseau de trous dans les modules ou les tôles perforées, effectuent les points de piqûre destinés à réaliser les coutures.

15. Dispositif selon l'une quelconque des revendications 7 à 14, **caractérisé en ce que** les surfaces perméables aux gaz sont revêtues de couches du type brosses.
